# EUROPEAN PATENT APPLICATION

(11) **EP 1 935 737 A1**
(43) Date of publication of application: **25.06.2008**
(21) Application number: 06126894.2
(22) Date of filing: 21.12.2006
(51) Int. Cl.: B60W 20/00, B60T 8/1761, B60T 13/58, B60L 3/10, B60L 7/18, B60L 7/24, B60W 10/08, B60W 10/04, B60W 10/18

(54) **A braking system and a method for braking a vehicle**

(71) Applicant: Ford Global Technologies, LLC, Dearborn, MI 48126 (US)
(72) Inventor: Fuxin, Per Ola, 436 40 Askim (SE); Jonasson, Mats, 433 49 Partille (SE); Zetterström, Sigvard, 471 71 Hakenäset (SE)
(74) Representative: Bergquist, Kjell Gunnar

(57) **Abstract**

A braking system and method for a vehicle having a set of wheels and being controlled by an ABS system comprising wheel speed sensors at each wheel is provided. Braking performance is improved by an additional torque, generated from at least one wheel torque actuator (217), being selectively added or subtracted individually to each wheel during braking wherein distribution and synchronisation of braking force are controlled by a Central Brake Control (201) and a Brake Blending Control (207) depending on input from information-collecting unit (203, 205) giving information of car status, wheel status and tire status.

The invention also includes a vehicle comprising the inventive braking system.

## Description

### TECHNICAL FIELD

The present invention relates to a braking system according to the preamble of claim 1.

The invention also relates to a method for braking a vehicle according to the preamble of claim 11.

### BACKGROUND ART

ABS (Antilock Brake Systems) were developed to prevent the automotive wheels from locking during braking, thus increasing steering stability.

This is now being extended to traction control during all modes of driving and to anti-roll over control and other hazardous conditions drivers encounter.

In the current ABS systems wheel locking is detected through a comparison of the speed of the vehicle with the speed of the wheels. In practice, however, tire slippage and other factors pose problems in detecting the actual vehicle speed.

Therefore, vehicle speed is generally calculated from all of the wheel speeds by approximation. Detected values from magnetic wheel speed sensors on each wheel are digitized and entered into a high speed computer in real time. The wheel speeds are compared and a hypothetical vehicle speed is calculated and then differentiated to obtain information regarding vehicle acceleration or deceleration.

If any particular wheel, or set of wheels, exceeds or drops below predetermined values corresponding to a desired velocity and acceleration rates, a corrective control for the slipping or locking of each wheel is applied to the wheel's hydraulic braking system.

The need to enhance ABS braking is particularly urgent for large size cars having big and heavy wheels with geared or not geared in-wheel motors or otherwise permanently connected electrical motors. High wheel-inertia causes the ABS system to fail in controlling the longitudinal tire slip needed to maximize the longitudinal force generated from friction, especially when a hard braking is initiated and when road friction properties are rapidly changing. The wheel rotational speed has a tendency to overshoot both when slowing down (high brake clamping forces) and when the wheel is retaining speed after obtaining excessive slip (too much brake clamping force release). This results in unnecessarily large wheel speed fluctuations and loss of braking capacity.

The drawbacks with present prior art is the relatively slow and coarse regulation obtained with present ABS technology. This is especially true for high wheel-inertia vehicles and in conditions where the friction to the road surface is quickly changing.

### DISCLOSURE OF INVENTION

The present invention relates to a device and method for optimizing the ABS-function for motor vehicles, especially high wheel-inertia vehicles with large size wheels.

It is therefore an object of the invention to provide an enhanced braking system and method for a vehicle controlled by a generally conventional ABS system and comprising wheel speed sensors at each wheel which can solve the drawbacks described above for present ABS technology.

This object is achieved by a braking system of the type mentioned initially, which comprises brake controlling means (201, 207) for selectively adding or subtracting torque, generated from at least one wheel torque actuator (217) and distributed individually to each wheel during braking, wherein distribution and synchronisation of friction braking and additional braking force generated by the wheel torque actuator are controlled by the brake controlling means depending on input from information-collecting unit giving information of car status, wheel status and tire status.

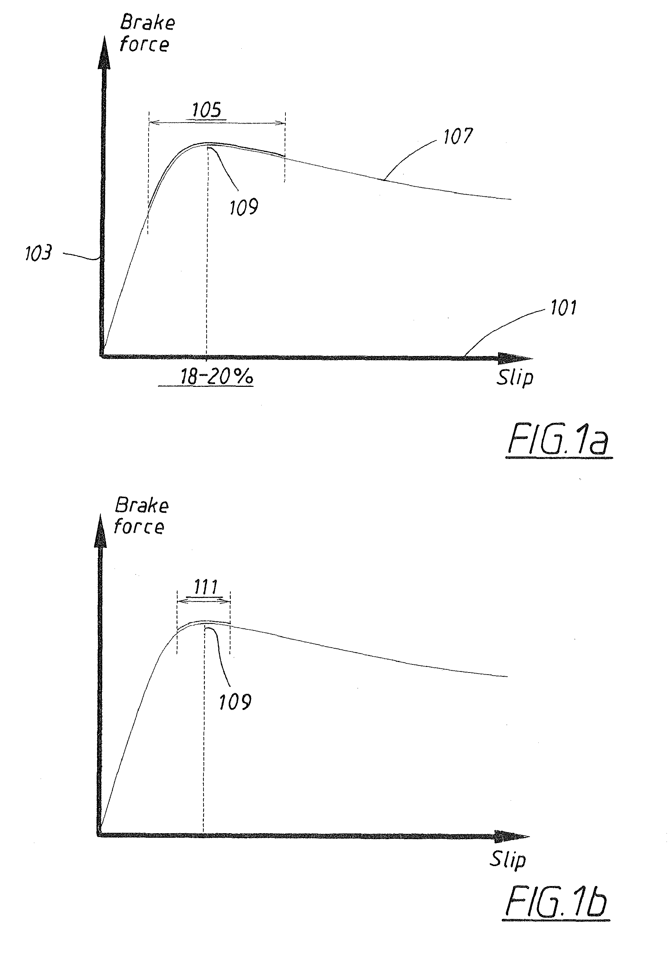

State of the art ABS regulation can be described with reference to figure 1a. The horizontal axis 101 shows the longitudinal slip and the vertical axis 103 shows the brake force. The slip is 0% when the wheel is free rolling, i.e. no brake force applied, and 100% when the wheels are locked and there is no rotation at all. The curve 107 shows an example of a situation in which there is a maximum brake force with a slip of about 18-20%. When the slip is increased above 18-20%, e.g. by increasing the pressure on the brake pedal, the brake force is decreasing. The manoeuvring of the vehicle is also made much worse with increased slip as a result. The ABS control system regulates the slip in a span 105 around the maximum adhesion point 109 by controlling the wheel speed sensors and activating and deactivating braking means as described above. The curve 107 is typical for a wheel with high inertia and/or in conditions with low wheel-to-road friction. During these conditions the span 105 will be relatively wide as indicated in the figure.

The invention allows a driving torque to be added or subtracted to the braking wheel as will be described in detail below and which is also indicated in figure 1b. This will result in an increase of the regulation frequency and accuracy. The regulation span 111 shown in figure 1b will be narrower. The narrow span close to the maximum adhesion point 109 in the brake force-slip curve ensures good braking performance such as shorter braking distance and above all better manoeuvring qualities during braking.

The main advantage with the invention is this possibility to improve ABS control strategy by adding or subtracting driving torque to the wheels during braking.

During hard braking when road friction is very low, the brake function may be executed exclusively by the wheel torque actuator, preferably an electric motor.

The invention also increases the comfort for vehicle passengers as the braking force will be more uniformly distributed. The braking will become smoother.

Further advantages are attained if the torque actuation enhanced ABS control also is given one or several characteristics of the independent claims.

### BRIEF DESCRIPTION OF DRAWINGS

The invention will now be described more in detail with reference to the enclosed drawings where:
- Figure 1a and 1b: describes schematically ABS regulation with and without the invention implemented.
- Figure 2: is a block diagram of the braking system of the invention.
- Figure 3: shows ABS modulation with and without the invention implemented using a normal performance with an aluminium wheel as a reference.

### EMBODIMENT(S) OF THE INVENTION

The invention will in the following be described in detail with reference to the drawings.

Figure 1 has already been described above in connection to the disclosure of the invention.

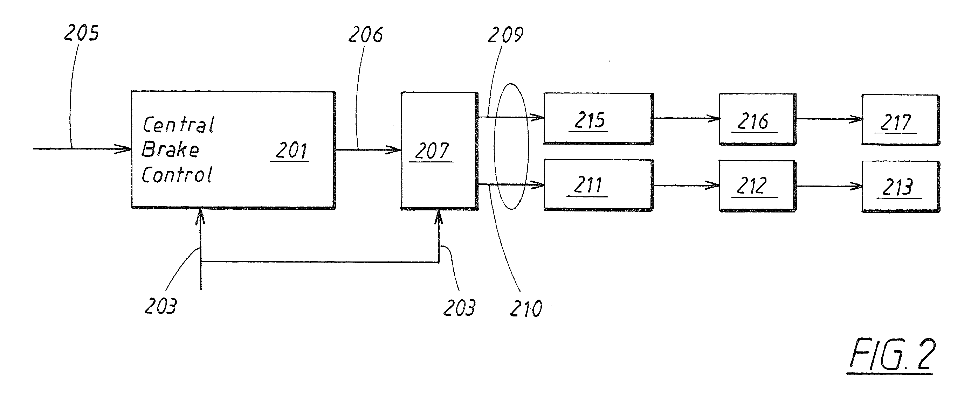

Figure 2 is a block diagram of the inventive braking system. A Central Brake Control (CBC) 201 receives vehicle brake force requirements 205 from e.g. a brake pedal (not shown). It could be either a hydraulic brake pedal generating an electrical signal proportional to the pressure level on the braking pedal or a brake by wire system directly generating an electrical signal.

The CBC 201 also receives input information from Sensors and Observers 203, i.e. information-collecting units in the vehicle. The object of the CBC 201 is to collect information about the car status, how the vehicle is moving in relation to the road, the wheel status and tire status.

This input information always includes wheel speed information from sensors at each wheel and vehicle speed. Other types of information about the car are longitudinal speed, yaw rate and lateral acceleration. The input to the CBC 201 can also include tire status such as temperature and Observers such as slip calculations or other calculations performed outside the inventive braking system. The information from Sensors and Observers 203 is fed to the CBC 201, which in turn is connected to a Brake Blending Control (BBC) 207. The CBC 201 can also be defined as the standard ABS control unit where the input information 203 has been substantially increased to include not only wheel and vehicle speed information as is the case for ABS, but also other information about car and tire status.

The CBC 201 is an electronic unit comprising calculation means using e.g. a microcomputer. With the available input information the CBC 201 calculates the brake force 206 needed at each wheel which is fed into the BBC 207.

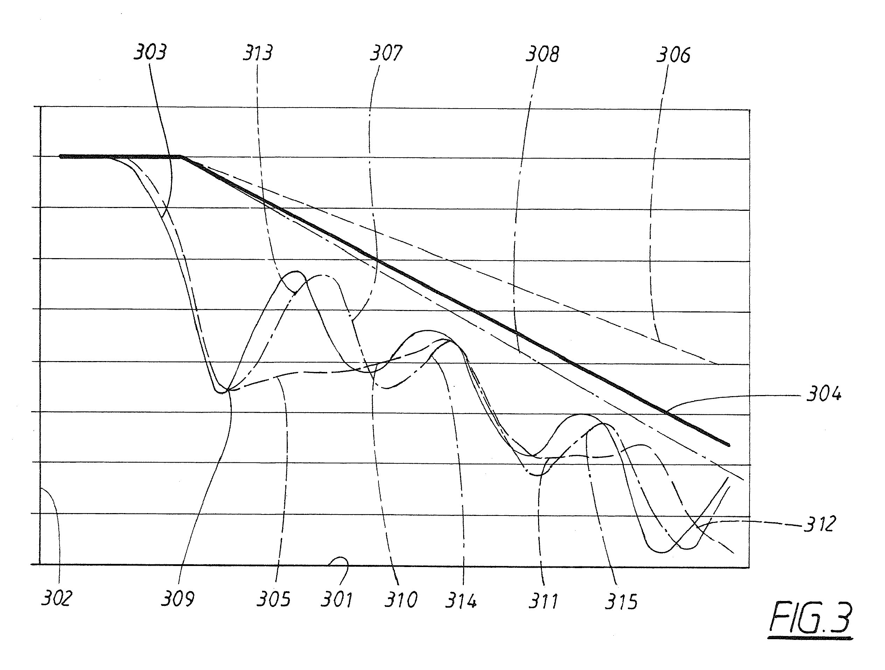

The BBC 207 distributes, for each wheel, the braking force between conventional friction brake and an additional brake force generated by a wheel torque actuator, typically an electrical motor. The electrical signals 209 and 210, generated by the BBC 207, are proportional to the respective braking forces calculated by the BBC 207. The 209 signal is fed to an Electrical Machine Control 215 connected in series with Power Electronics 216 and an Electrical Machine 217. The Electrical Machine Control 215 generates a signal proportional to how much torque to be added or subtracted to achieve the optimized ABS modulation described in association with figure 3 below.

The Power Electronics 216 supplies the Electrical Machine 217 with power in response to the torque demand calculated by the Electrical Machine Control 215. The torque demand could be either a driving or braking torque.

In a preferable embodiment there is one Electrical Machine integrated into each wheel. However it can also be possible to have an electrical Machine in common for two or four wheels and means for distribution of individual driving torques to each wheel. This could be achieved with a differential gear being able to distribute both speed and torque for each wheel.

The invention is however not limited to the wheel torque actuator being Electrical Machines. Internal combustion engines or any other suitable engine can be used instead of the Electrical Machine. In one embodiment hydraulic motors could be integrated into each wheel.

The friction brake signal is fed to the Hydraulic Pressure Control 211 connected in series with Booster Pressure 212 and Friction Brake 213. The Booster Pressure 212 supplies the Friction Brake 213 with a pressure towards a brake disc in response to the brake force demand calculated by the Hydraulic Pressure Control 211.

The CBC 201 and the BBC 207 can when suitable be integrated into one common control unit, thereby forming a complete brake controlling unit.

The ABS modulation principles will now be described with reference to figure 3 where the horizontal axis 301 is the time and the vertical axis 302 the speed of a vehicle. The solid line 304 represents the decreased speed of the vehicle during standard ABS operation with a normal aluminium wheel. The corresponding wheel speed variation as a function of time is shown by solid curve 303.

The speed reduction for a vehicle with high inertia wheels is shown with dashed line 306. As can be seen the speed decrease is slower and thus the braking distance longer. Over and above this the manoeuvre capabilities of the vehicle becomes worse. This is the situation illustrated in figure 1 a with a relatively wide slip-force span 105. Dashed curve 305 also shows that the frequency for the wheel speed variations becomes lower compared to the normal ABS situation shown above.

The chain-dotted line 308 shows how the vehicle speed is decreased with the invention implemented on a vehicle with high inertia wheels. The speed is decreased faster and the braking distance thus becomes shorter. The situation is illustrated in a corresponding manner in figure 1b with a narrow slip-force span 111 meaning that the braking force is always close to the optimum adhesion point 109.

By adding a driving torque in point 309, 310, 311 and 312 the wheel speed is increased at these points and the curve 305 is transformed into the shape of curve 307. The additional driving torque is applied during a short interval and stopped just before the curve reaches a maximum, (points 313, 314 and 315), and the ABS braking force is activated. The calculations of when to apply the additional torque as well as the duration and magnitude of the torque addition are calculated by algorithms in the BBC 207 as well as the synchronization of the brake and torque sequences. Thus, and due to rapid motor response, the ABS regulating frequency can be increased and maintained independent of loading and road friction.

The invention is not describing the algorithms how the integration of brake control and torque control is to be designed, as there will be numerous ways how to perform the integration. This is accomplished by software included in the CBC 201 and BBC 207.

The state-of-the-art electric motor brake recuperation of electric power is not disturbed by the added torque actuation, but regeneration of electric power can of course not take place when the motor is in its wheel-speed-up torque mode.

During hard braking when road friction is very low the regulation frequency must be high and the regulation amplitude low to maintain manoeuvring possibilities and to maintain a position close to the optimum adhesion point 109 in the slip-force curve. This can be realized with the invention by executing the braking exclusively with the wheel torque actuator, preferably an electrical motor. The wheel torque actuator can execute rapid drive and brake pulsations by adding positive and negative torque.

The invention is not limited to the embodiment described above but can be varied within the scope of the appended claims.

## Claims

1. A braking system for a vehicle having a set of wheels and being controlled by an ABS system comprising wheel speed sensors at each wheel
**characterized in**
**that** it comprises brake controlling means (201, 207) for selectively adding or subtracting torque, generated from at least one wheel torque actuator (217) and distributed individually to each wheel during braking, wherein distribution and synchronisation of friction braking and additional braking force generated by the wheel torque actuator (217) are controlled by the brake controlling means (201, 207) depending on input from information-collecting unit (203, 205) giving information of car status, wheel status and tire status.

2. A braking system according to claim 1 **characterized in that** the at least one wheel torque actuator comprises an electrical motor.

3. A braking system according to claim 2 **characterized in that** the at least one wheel torque actuator comprises an electrical motor integrated in each wheel.

4. A braking system according to claim 1 **characterized in that** the at least one wheel torque actuator comprises an internal combustion engine.

5. A braking system according to claim 1 **characterized in that** the at least one motor comprises a hydraulic motor.

6. A braking system according to claim 5 **characterized in that** the at least one wheel torque actuator comprises a hydraulic motor integrated in each wheel.

7. A braking system according to any of the preceding claims **characterized in that** said brake controlling means (201, 207) is constituted by a Central Brake Control (201) and a Brake Blending Control (207).

8. A braking system according to any of the preceding claims **characterized in that** braking being performed exclusively by braking force generated by the wheel torque actuator (217).

9. A braking system according to any of the preceding claims **characterized in that** said information-collecting unit comprise Sensors and Observers arranged for feeding an input (203) comprising an external calculation such as a slip calculation

10. A vehicle **characterized in that** it comprises a braking system according to any of the preceding claims.

11. A method for braking a vehicle having a set of wheels and comprising an ABS braking system with wheel speed sensors at each wheel **characterized in** torque being selectively added or subtracted, controlled by brake controlling means (201, 217), and generated from at least one wheel torque actuator (217) and distributed individually to each wheel during braking and that distribution and synchronisation of friction braking and additional braking force generated by the wheel torque actuator (217) is controlled by the brake controlling means (201, 207) depending on input from information-collecting units giving information of car status, wheel status and tire status.
